# EUROPÄISCHE PATENTANMELDUNG

(11) **EP 2 461 017 A1**
(43) Veröffentlichungstag der Anmeldung: **06.06.2012**
(21) Anmeldenummer: 10193696.1
(22) Anmeldetag: 03.12.2010
(51) Int. Cl.: F03B 13/08, F03B 17/06

(54) **Archimedische Wasserschraubenanlage und Aufstellungsverfahren**

(71) Anmelder: Rehart GmbH, 91725 Ehingen (DE)
(72) Erfinder: Habermann, Christian, 91596 Burk (DE); Zeiler, Georg, 91469 Hagenbüchach (DE)
(74) Vertreter: Nunnenkamp, Jörg

(57) **Zusammenfassung**

Gegenstand der vorliegenden Erfindung ist eine Wasserschneckenanlage, insbesondere Wasserkraftschnecke und/oder Wasserhebeschnecke. Zum grundsätzlichen Aufbau gehört wenigstens ein in einem Trog (3) aufgenommenes Schneckenrad (4). Erfindungsgemäß werden der Trog (3) und/oder das Schneckenrad (4) im Zuge ihrer Aufstellung am Betriebsort an eine bauseitig bereits vorhandene Trageinheit (6, 7, 8, 9) angeschlossen.

## Beschreibung

Die Erfindung betrifft eine Wasserschneckenanlage, insbesondere eine Wasserkraftschnecke und/oder eine Wasserhebeschnecke, mit wenigstens einem in einem Trog aufgenommenen Schneckenrad.

Wasserkraftschnecken dienen üblicherweise zum Erzeugen elektrischer Energie durch Umwandlung von Strömungsenergie eines strömenden Gewässers. Solche Wasserkraftanlagen bzw. Wasserkraftschnecken sind in vielfältiger Art und Weise bekannt. Dazu wird nur beispielhaft auf die EP 1 930 597 A2 verwiesen. An dieser Stelle kommt ein nach dem archimedischen Prinzip aufgebautes Schneckenrad bzw. eine archimedische Schraube als Rotoreinheit zum Einsatz. Das gilt in vergleichbarer Weise auch für die DE 41 39 134 A2.

Darüber hinaus können solche Wasserschneckenanlagen als Wasserhebeschnecken eingesetzt werden, dienen also nicht zum Erzeugen elektrischer Energie, sondern erfordern vielmehr einen Motor für ihren Antrieb. Tatsächlich wird mit Wasserhebeschnecken typischerweise Wasser von einem niedrigeren auf ein höheres Niveau gefördert. Das kann beispielsweise im Zuge von Entwässerungsmaßnahmen erfolgen, wie sie unter anderem in den Niederlanden in großem Stil eingesetzt werden. Hier dienen unter anderem Windräder zum Antrieb solcher Wasserhebeschnecken. Verwiesen wird diesbezüglich auf entsprechende Veröffentlichungen der Anmelderin unter der Internetseite "rehart.de/Wasserhebeschnecken". Ähnliches zeigt die DE 41 39 134 A1 in der dortigen Fig. 5.

Die bekannten Wasserschneckenanlagen haben sich grundsätzlich bewährt, sind allerdings, was die Montage und Aufstellung am Betriebsort angeht, verbesserungsfähig. Denn üblicherweise wird am Betriebsort der Trog mit einem Betonfundament hintergossen bzw. auf ein entsprechend zuvor gegossenes Betonfundament aufgelegt. Dazu muss am Betriebsort zunächst ein Bauwerk mit Bauwerksaußenwänden und einer Sohle gegründet werden. Der Trog wird dann in diesem Bauwerk auf entsprechende Auflager aufgelegt, ausgerichtet und dann gegebenenfalls mit Beton hintergossen. Diese Vorgehensweise stellt erhebliche Anforderungen an die Außenwände des Bauwerkes und auch einen oftmals vorgesehenen Fundamentsockel im Auslaufbereich des Troges. Tatsächlich muss der Trog vor dem Verguss exakt ausgerichtet werden, was durch beispielsweise am Betriebsort aufzustellende Kräne, Bedienpersonen etc. erfolgen muss. Als Folge hiervon stellen sich manchmal nicht unerhebliche Schwierigkeiten ein und sind die Montagezeiten oftmals lang. Hier will die Erfindung insgesamt Abhilfe schaffen.

Der Erfindung liegt das technische Problem zugrunde, eine Wasserschneckenanlage des eingangs beschriebenen Aufbaus so weiter zu entwickeln, dass die Montage deutlich vereinfacht ist und insbesondere zügig vonstatten geht.

Zur Lösung dieser technischen Problemstellung ist eine gattungsgemäße Wasserschneckenanlage im Rahmen der Erfindung dadurch gekennzeichnet, dass der Trog und/oder das Schneckenrad im Zuge ihrer Aufstellung am Betriebsort an eine bauseitig bereits vorhandene Trageinheit angeschlossen werden. - Meistens wird der Trog an die bauseitig vorhandene Trageinheit angeschlossen, weil das Schneckenrad bereits im Zuge einer werksseitigen Montage in dem Trog angeordnet und ausgerichtet wird. Grundsätzlich kann alternativ oder zusätzlich aber auch das Schneckenrad an die bauseitig vorhandene Trageinheit bei Bedarf angeschlossen werden.

Nach vorteilhafter Ausgestaltung handelt es sich bei der Trageinheit um eine Tragkonsole, also eine Stützkonstruktion, die in der Regel mit einem oder mehreren Auflagerbereichen für den Trog ausgerüstet ist, um diesen zu tragen. Dabei mögen an dem Trog Zapfen oder vergleichbare Vorsprünge angeordnet sein, die bei der Aufstellung der Wasserschneckenanlage insgesamt auf dem einen oder den mehreren Auflagerbereichen der Tragkonsole abgelegt oder auf diese aufgelegt werden. Die Auflagebereiche sind als solche meistens an zwei Träger angeschlossen.

Im Regelfall ist die Trageinheit mit den wenigstens zwei Trägern ausgerüstet, welche den Trog zwischen sich aufnehmen und halten. Weil es sich bei der Trageinheit um eine Tragkonsole handelt, fungieren die Träger regelmäßig als Konsolenträger der Tragkonsole. Dabei kann der jeweilige Konsolenträger einen Auflagerbereich für den zugehörigen Zapfen bzw. Vorsprung an dem Trog aufweisen.

Meistens ist neben den beiden seitlich des Troges angeordneten Trägern der Trageinheit zusätzlich noch ein kopfseitiger Träger vorgesehen. Dieser kopfseitige Träger überspannt im Allgemeinen die beiden seitlichen Träger und ist auf diesen kopfseitig gelagert. Auf diese Weise kann der kopfseitige Träger als Halterung für ein Lager und insbesondere ein ablaufseitiges Lager des Schneckenrades und/oder den Trog fungieren. Tatsächlich verfügt das Schneckenrad über wenigstens zwei Lager gegenüber dem Trog. Dabei ist meistens ein einlaufseitiges Lager vorgesehen, welches sich im Bereich eines Wassereinlaufes findet. Dieses Lager kann grundsätzlich von einem Generator und/oder einem Motor gebildet werden, welcher an das Schneckenrad angeschlossen ist. Neben diesem einlaufseitigen Lager verfügt das Schneckenrad ergänzend über das bereits beschriebene ablaufseitige bzw. auslaufseitige Lager. Dieses wird vorteilhaft an den kopfseitigen Träger der Trageinheit angeschlossen. Auf diese Weise ist die Trageinheit als insgesamt U-förmiges Profil ausgebildet, und zwar aus den beiden seitlichen Trägern und dem die beiden seitlichen Träger kopfseitig verbindenden kopfseitigen Träger, der zugleich auf den beiden seitlichen Trägern aufgelagert ist.

Um die Trageinheit bauseitig zu realisieren, und zwar vor Anbringung des Troges und/oder des Schneckenrades, wird die Trageinheit am Betriebsort vor der Aufstellung bzw. Montage der Wasserschneckenanlage platziert. Dabei hat es sich als günstig erwiesen, wenn die Trageinheit in Betonfundament eingegossen wird. Auf diese Weise steht die Trageinheit unmittelbar bei der Aufstellung der Wasserschneckenanlage am Betriebsort zur Verfügung, die als Folge hiervon mit dem beispielsweise am Trog angebrachten Zapfen respektive Vorsprüngen unmittelbar auf die zumeist zwei sich gegenüberliegenden Auflagebereiche an den beiden Konsolenträgern aufgelegt wird. Alternativ oder zusätzlich kann die Trageinheit aber auch ganz oder teilweise in das Erdreich am Betriebsort eingetrieben werden.

Aus Stabilitätsgründen hat es sich bewährt, wenn sich die Trageinheit insgesamt aus vorzugsweise 1-förmigen Trägern und insbesondere Stahlträgern zusammensetzt. Solche l-förmigen Träger verfügen über eine besonders hohe Verwindungsstabilität und sind folglich für den beschriebenen Einsatzzweck prädestiniert. Dabei wird man meistens so vorgehen, dass der Trog mit einem Ende, also einendseitig, an die Trageinheit angeschlossen wird. Grundsätzlich können aber auch zwei Trageinheiten vorgesehen werden, so dass der Trog beidendseitig an die jeweils zugehörigen Trageinheiten angeschlossen wird.

Typischerweise wird die beschriebene Wasserschneckenanlage zwischen einem Oberwasserspiegel und einem Unterwasserspiegel im Bereich eines Wehres aufgestellt. Im Falle einer Wasserkraftschnecke fließt das Wasser vom Oberwasserspiegel durch den Trog zum Unterwasserspiegel und versetzt dabei das Schneckenrad in Rotation. Ein an das Schneckenrad angeschlossener Generator liefert bei diesem Vorgang elektrische Energie. Dabei wird man typischerweise das generatorseitige Ende bzw. einlaufseitige Ende des Troges ebenso mit einem Auflager ausrüsten wie das ablaufseitige bzw. auslaufseitige Ende des Troges. Außerdem ist in diesem Fall meistens auslaufseitig bzw. ablaufseitig des Troges die erfindungsgemäße Trageinheit realisiert.

Grundsätzlich kann die beschriebene Wasserschneckenanlage aber auch als Wasserhebeschnecke arbeiten. Dann ist nicht ein Generator, sondern vielmehr ein Motor und insbesondere ein Elektromotor an das Schneckenrad angeschlossen und kann dieses antreiben, um beispielsweise Wasser vom Unterwasserspiegel zum Oberwasserspiegel zu fördern. In diesem Fall wird man die Trageinheit erneut im Bereich des Unterwasserspiegels anordnen, diesmal einlaufseitig des Troges. Denn das motor- bzw. generatorseitige Ende auslaufseitig des Troges erfährt meistens eine spezielle Lagerung und Anbringung, wohingegen das Ende des Troges im Bereich des Unterwasserspiegels demgegenüber ausgerichtet wird und werden muss.

Die Auslegung der Trageinheit als insgesamt U-förmiges Profil begünstigt die Anbringung eines Reduzierelementes im Bereich der betreffenden Trageinheit. Mit Hilfe dieses Reduzierelementes lässt sich der Ausströmquerschnitt verringern. Bei diesem Reduzierelement handelt es sich typischerweise um ein an den Trog angeschlossenes Ringelement. Dieses Ringelement kann als Vollringelement, Halbringelement, Dreiviertelringelement etc. ausgelegt werden, also als geschlossenes oder geöffnetes Ringelement. Meistens greift man in diesem Zusammenhang auf ein konisch ausgeführtes Ringelement zurück. Mit dessen Hilfe wird ein verbessertes Ausströmen des Wassers aus dem Trog zur Verfügung gestellt. Außerdem verringert das fragliche Reduzierelement die Entstehung von turbulenten Strömungen in diesem Bereich. Dabei ist die Trageinheit insgesamt zwischen dem Trog und einem Trogauflager angeordnet bzw. fungiert die Trageinheit selbst als Trogauflager für den Trog. Dann ist ein Konsolenflansch der Trageinheit zwischen dem Trog und einem Auflagerbereich angeordnet.

Im Ergebnis wird eine Wasserschneckenanlage zur Verfügung gestellt, die mit besonderen Vorteilen und Wirkungen ausgerüstet ist. Tatsächlich ergeben sich zunächst einmal erhebliche Montageerleichterungen. Denn die vom Trog und/oder der im Trog in Längsrichtung drehbar gelagerten Schneckenrad aufgenommenen Lasten werden über die Trageinheit primär aufgenommen und direkt in das Betonfundament (falls vorhanden) und folglich eine Bauwerkssohle eingetragen. Etwaige Kräfte müssen von dem Bauwerk als solchen nicht (mehr) aufgenommen werden. Vielmehr dient die Trageinheit bzw. die Tragkonsole dazu, im Idealfall sämtliche Lasten der Wasserscheckenanlage aufzunehmen und auch aufnehmen zu können.

Das gilt auch und insbesondere für den Fall, dass im Bereich der Trageinheit das bereits beschriebene Reduzierelement vorgesehen ist, mit dessen Hilfe die jeweilige Gangfüllung in den einzelnen Schnecken des Schneckenrades erhöht wird. Daraus resultieren gestiegene Querkräfte auf den Trog, die von der Trageinheit aufgenommen werden und beispielsweise nicht von Seitenwänden eines Bauwerkes. Folglich können etwaige Seitenwände eines am Betriebsort eventuell vorgesehenen und errichteten Bauwerkes deutlich einfacher gestaltet werden, was die Bauwerkskosten reduziert. In vergleichbarer Weise macht die erfindungsgemäße Trageinheit einen Fundamentsockel meistens auslaufseitig bzw. ablaufseitig des Troges entbehrlich, weil die gesamten vom Trog und/oder dem Schneckenrad aufgebauten Kräfte von der Trageinheit bzw. Tragkonsole aufgenommen und in das zugehörige Fundament bzw. eine Bauwerkssohle eingeleitet werden.

Der Verzicht auf einen Fundamentsockel im Auslaufbereich vermeidet an dieser Stelle in der Vergangenheit oftmals vorhandene Ablagerungen und verbessert auch die Fischverträglichkeit. D. h., Fische werden beim Durchgang durch die Wasserschneckenanlage nicht oder praktisch nicht in ihrem Schwimmverhalten gestört.

Hinzu kommt, dass eine Einschalung zum Verguss des Troges praktisch nicht mehr erforderlich ist bzw. erheblich vereinfacht werden kann. Dadurch lassen sich nochmals die Baukosten reduzieren. Ganz abgesehen davon wird die Montage und insbesondere Aufstellung der Wasserschneckenanlage am Betriebsort erheblich vereinfacht, weil die bisher erforderlichen Maßnahmen zur Ausrichtung, Befestigung und eventuell Auftriebssicherung des Troges vor dessen Verguss nicht oder jedenfalls nicht mehr in diesem Maße erforderlich sind. Vielmehr reicht es aus, die Trageinheit vor der Aufstellung der Wasserschneckenanlage am Betriebsort so in das Betonfundament einzugießen bzw. am Betriebsort durch Eintreiben in das Erdreich so zu platzieren, dass bei der Aufstellung der Trog mit seinen Zapfen bzw. Vorsprüngen lediglich noch auf die Auflagerbereiche der Trageinheit aufgelegt zu werden braucht. Etwaige nachträgliche Ausrichtmaßnahmen sind nicht erforderlich, sondern die Wasserschneckenanlage verfügt hierdurch insgesamt und von vornherein über die richtige und abschließende Ausrichtung.

Hinzu kommt, dass die einzelnen Auflagerbereiche an den Konsolenträgern bei Bedarf angehoben werden können. Hier ist sogar eine verstellbare Lagerung der Auflagebereiche an den Konsolenträgern denkbar. Dadurch kann beispielsweise einer Änderung des Unterwasserspiegels problemlos Rechnung getragen werden und es lassen sich etwaige Aus- und Einlaufverluste reduzieren und die Fischverträglichkeit verbessern.

Dadurch, dass die Trageinheit nach vorteilhafter Ausgestaltung in ein Betonfundament am Betriebsort eingegossen wird, erfährt der Trog eine erhebliche Versteifung. Auf diese Weise lassen sich etwaige Vibrationen, Lastwechsel, Schub- und Walkkräfte des Schneckenrades großflächig in das Betonfundament einleiten und werden hierdurch deutlich gedämpft. Hinzu kommt, dass die Trageinheit auch zur Fixierung des ablaufseitigen Lagers des Schneckenrades dient bzw. meistens das dem Unterwasserspiegel zugeordnete Lager des Schneckenrades fixiert. Dadurch wird seine Standzeit gegenüber bisherigen Vorgehensweisen erheblich erhöht.

Vergleichbare Vorteile werden erzielt, wenn die Trageinheit ganz oder teilweise in das Erdreich am Betriebsort eingetrieben wird. Hier haben sich beispielsweise Spundsandträger als Konsolenträger bewährt, welche als Auflager für den kopfseitigen Träger fungieren. An dem kopfseitigen Träger kann der Trog und/oder das Schneckenrad aufgehängt werden.

Schlussendlich kann die Trageinheit besonders vorteilhaft mit dem bereits beschriebenen Reduzierelement kombiniert werden. Dabei werden insgesamt mögliche Fehlerquellen, wie nicht eingehaltene Spaltmaße, Ausrichtungsfehler etc. vermieden, weil die Wasserschneckenanlage im Herstellerwerk praktisch vollständig vormontiert werden kann und am Betriebsort lediglich auf den Auflagebereichen an der Tragkonsole abgelegt wird. Eine zusätzliche Auftriebssicherung des Troges ist nicht mehr erforderlich, weil die Zapfen bzw. Vorsprünge an dem Trog an dem betreffenden Auflagerbereich mechanisch gesichert werden können.

Schlussendlich müssen etwaige Kräfte des Troges nicht mehr durch seine Verlängerung in die Bauwerksohle eingeleitet werden, sondern wird dies über die seitlichen Zapfen bzw. Vorsprünge in Verbindung mit der Trageinheit bzw. Tragkonsole gewährleistet. Dadurch verfügt die Wasserschneckenanlage insgesamt über eine im Vergleich zu bisherigen Lösungen geringere freitragende Spannweite. Als weitere positive Folge hiervon stellen sich kleinere Biegekräfte ein und die Lager für das Schneckenrad werden weniger belastet. Zugleich sinkt eine etwaige Walkbelastung des das Schneckenrad aufnehmenden Troges. Außerdem ermöglicht der Rückgriff auf Spundwandträger eine Anbringung auch bei schwierigem Untergrund. Dadurch lässt sich der Betriebsort unschwer wieder renaturieren. Denn es kann sogar gänzlich auf Fundamente verzichtet werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: Eine erfindungsgemäße Wasserschneckenanlage schematisch in einer perspektivischen Ansicht, teilweise im Schnitt,
- Fig. 2: einen Ausschnitt aus Fig. 2 im Bereich des Unterwasserspiegels und
- Fig. 3A, 3B: abgewandelte Ausgestaltungen.

In den Figuren ist eine Wasserschneckenanlage dargestellt, bei welcher es sich nicht einschränkend um eine Wasserkraftschnecke handelt, also eine Wasserkraftschneckenanlage zum Erzeugen elektrischer Energie durch Umwandlung von Strömungsenergie eines strömenden Gewässers. Tatsächlich ist die Wasserschneckenanlage zu diesem Zweck zwischen einem Oberwasserspiegel 1 und einem Unterwasserspiegel 2 angeordnet.

Zum grundsätzlichen Aufbau der Wasserschneckenanlage gehören ein Trog 3 und ein um eine Längsachse im Trog 3 drehbar angeordnetes und hierin aufgenommenes Schneckenrad 4. Im Ausführungsbeispiel ist der Trog 3 nach oben hin geöffnet. An das Schneckenrad 4 ist endseitig ein Generator 5 angeschlossen, welcher bei Rotationen des Schneckenrades 4 elektrische Energie erzeugt. Derartige Rotationen des Schneckenrades 4 werden dadurch hervorgerufen, dass das Wasser vom Oberwasserspiegel 1 ausgehend einzelne Schneckengänge des Schneckenrades 4 füllt, die sich schwerkraftunterstützt in Richtung auf den Unterwasserspiegel 2 bewegen und hierbei Schubkräfte auf das Schneckenrad 4 ausüben und dieses in Rotationen versetzen.

Von besonderer Bedeutung für die Erfindung ist nun die Tatsache, dass der Trog 3 im Zuge seiner Aufstellung am Betriebsort an eine bauseitig bereits vorhandene Trageinheit 6, 7 bzw. 6, 7, 8, 9 angeschlossen wird. Die Trageinheit 6, 7 bzw. 6, 7, 8, 9 ist als Tragkonsole ausgebildet, also als Stützkonstruktion, die mit Auflagerbereichen 8 für Zapfen bzw. Vorsprünge 9 am Trog 3 ausgerüstet ist.

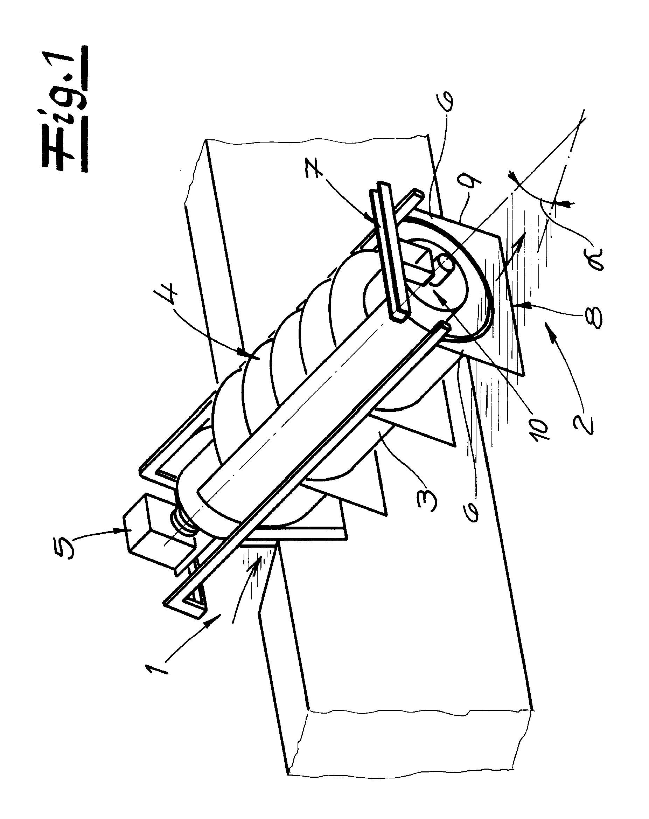

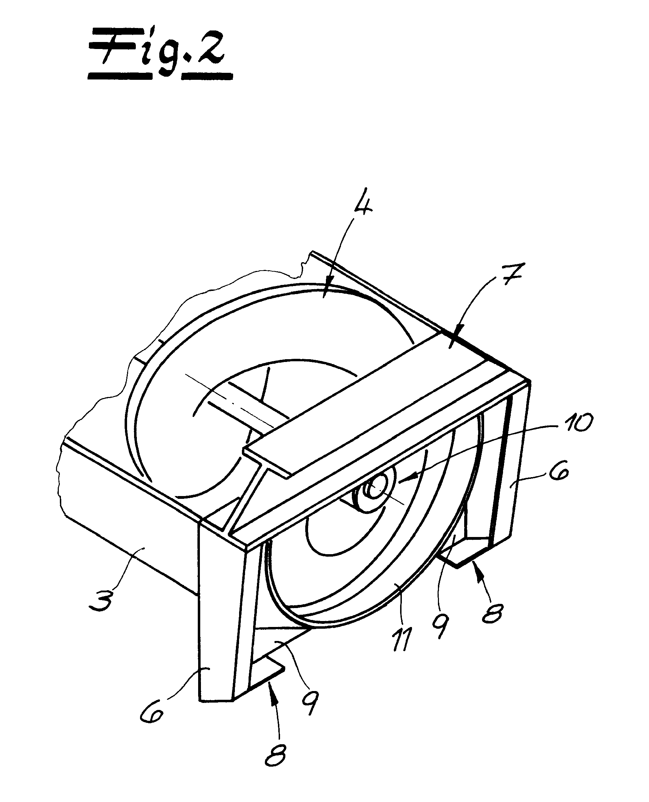

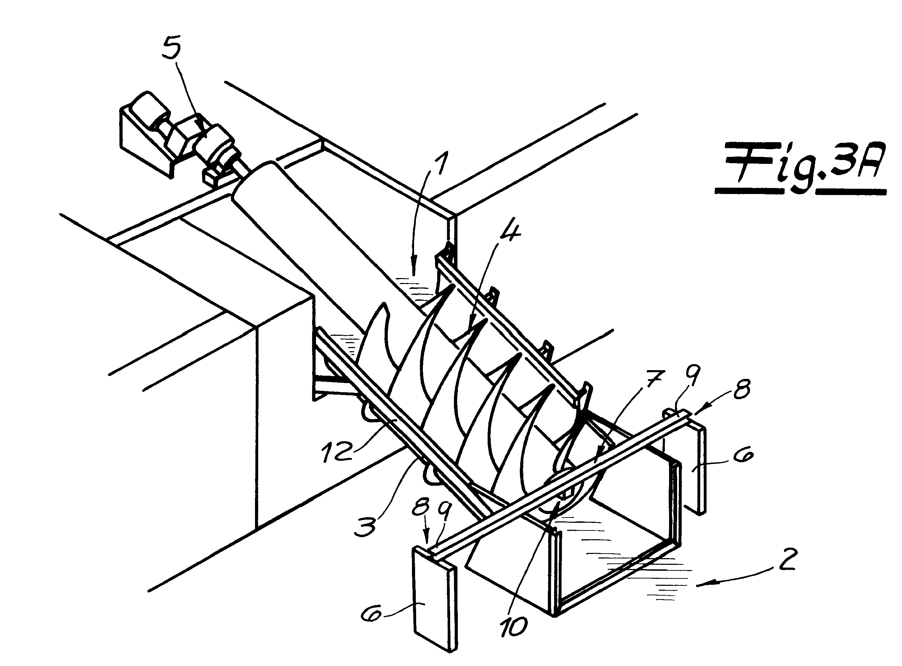

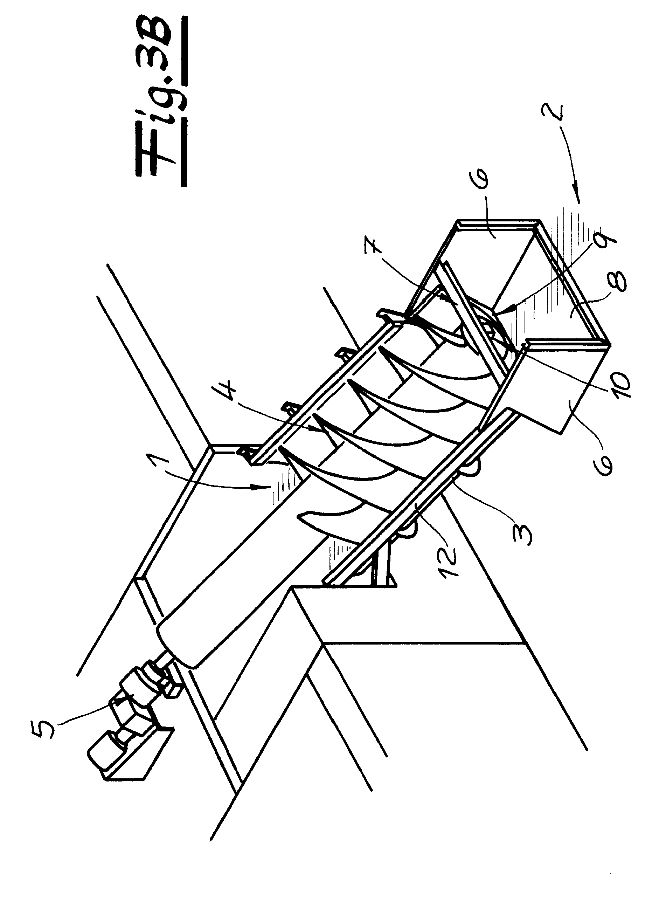

Im Detail verfügt die Trageinheit 6, 7 bzw. 6, 7, 8, 9 über zwei seitlich des Troges 3 angeordnete Träger 6 und zusätzlich einen kopfseitigen Träger 7. Dadurch ist die Trageinheit 6, 7 bzw. 6, 7, 8, 9 als insgesamt U-förmiges Profil ausgebildet. Der kopfseitige Träger 7 dient als Halterung für ein ablaufseitiges Lager 10 des Schneckenrades 4 im Beispielfall nach den Fig. 1 und 2. Bei der Ausführungsform gemäß Fig. 3A, 3B fungiert der Träger 7 zusätzlich als Halterung für den Trog 3. Tatsächlich wird das Lager 10 bzw. der Trog 3 bei der Variante nach den Fig. 3A und 3B an Flansche des kopfseitigen Trägers 7 angeschlossen. Der kopfseitige Träger 7 verfügt über eine im Wesentlichen horizontale Anordnung und lagert jeweils endseitig auf den demgegenüber überwiegend vertikal angeordneten seitlichen Trägern 6. Die einzelnen Träger 6, 7 können beispielsweise durch Schweißen oder auch durch jeweilige Schraubverbindungen miteinander gekoppelt werden.

Außerdem hat es sich bewährt, wenn die Trageinheit 6, 7 bzw. 6, 7, 8, 9 aus insgesamt l-förmigen Trägern 6, 7 und insbesondere Stahlträgern aufgebaut ist und sich zusammensetzt. Solche 1-förmigen Träger 6, 7 verfügen im Querschnitt über einen 1-förmigen Charakter und folglich eine besonders hohe Verwindungssteifigkeit gegenüber Torsionen in Längsrichtung (vgl. Fig. 2). Bei der alternativen Gestaltung nach der Fig. 3A handelt es sich bei den Trägern 6 um ins Erdreich am Betriebsort eingetriebene Spundwandträger 6, auf welcher der 1-förmige kopfseitige Träger 7 in Auflagerbereichen 8 aufgelegt wird. Die Ausführungsform nach Fig. 3B greift auf Träger 6 zurück, die dort als Seitenwände eines Ablaufkastens 6, 8 ausgeführt sind. Die Variante nach Fig. 1 greift schließlich auf Träger 6 zurück, die in Verbindung mit Vorsprüngen 9 insgesamt einen Konsolenflansch 6, 9 bilden.

Tatsächlich bilden die beiden seitlichen Träger 6 zusammen mit dem kopfseitigen Träger 7 eine Tragkonsole 6, 7 aus. An die seitlichen Träger bzw. Konsolenträger 6 sind die Auflagerbereiche 8 angeschlossen bzw. in ihrem Bereich angeordnet, welche die Tragkonsole 6, 7 abstützen. Dabei können die Auflagerbereiche 8 gegenüber den seitlichen Trägern 6 verstellbar ausgebildet sein, um beispielsweise den Trog 3 im Ganzen im Hinblick auf seinen Neigungswinkel α zu verändern bzw. wechselnde Wasserstände des Oberwasserspiegels 1 respektive Unterwasserspiegels 2 ausgleichen zu können (vgl. Fig. 1).

Dazu ist der Trog 3 mit den Vorsprüngen 9 ausgerüstet, die zusammen mit den seitlichen Trägern 6 den Konsolenflansch 6, 9 definieren, welcher sich auf oder an den Auflagerbereichen 8 abstützt. Dieser Konsolenflansch 6, 9 ist mit einer bogenförmigen Ausnehmung ausgerüstet, deren Radius an den Radius des Troges 3 angepasst ist. Sobald also der Trog 3 auf den Konsolenflansch 6, 9 aufgelegt wird, erfährt der Trog 3 und mit ihm das darin gelagerte Schneckenrad 4 die gewünschte Ausrichtung im Vergleich zum Oberwasserspiegel 1 und Unterwasserspiegel 2.

Man erkennt, dass die Trageinheit 6, 7, 8, 9 endseitig an den Trog 3 angeschlossen ist bzw. endseitig des Troges 3 eine Anordnung findet. In diesem Bereich ist darüber hinaus ein Reduzierelement 11 realisiert, bei welchem es sich im Rahmen des Ausführungsbeispiels um einen Ring bzw. ein konisches Ringelement handelt. Tatsächlich ist das Reduzierelement 11 als konischer Halbring ausgelegt und an die Querschnittsform des nach oben offenen Troges 3 angepasst. Mit Hilfe des Reduzierelementes 11 wird der Ausströmquerschnitt der dargestellten Wasserkraftanlage verringert, so dass im Bereich des Unterwasserspiegels 1 weniger Turbulenzen und eine gleichmäßigere Strömung entstehen.

Der bereits angesprochene Konsolenflansch 6, 9 ist zwischen dem jeweiligen Trog 3 und den Auflagerbereichen 8 angeordnet, die zugleich als Trogauflager fungieren. Die gesamte Trageinheit 6, 7, 8, 9 wird vor Anbringung des Troges bzw. vor Aufstellung der Wasserschneckenanlage am Betriebsort an der gewünschten Stelle platziert. Dabei ist dafür Sorge zu tragen, dass insbesondere der Konsolenflansch 6, 9 so ausgerichtet wird, dass anschließend die insgesamt aufgestellte Wasserschneckenanlage mit ihrem Trog 3 und der dem darin aufgenommenen Schneckenrad 4 die erforderliche und richtige Ausrichtung erfährt. Dazu wird die Trageinheit 6, 7, 8, 9 insgesamt in ein nicht ausdrücklich dargestelltes Betonfundament eingegossen im Rahmen der Fig. 2. Im Anschluss hieran ist es lediglich noch erforderlich, den Trog 3 auf den Konsolenflansch 6, 9 aufzulegen, wobei die beiden aneinander angepassten Bogen von einerseits dem bogenförmigen Ausschnitt des Konsolenflansches 6, 9 und andererseits der Bogenform des zylindrischen Troges 3 dafür sorgen, dass der Trog 3 und mit ihm die darin befindliche Schnecke 4 richtig ausgerichtet sind.

Bei der alternativen Ausführungsform nach der Fig. 3A werden die dortigen Spundwandträger 6 in das Erdreich am Betriebsort eingetrieben. Die Spundwandträger 6 bzw. seitlichen Träger 6 definieren kopfseitig die Auflagebereiche 8 für den kopfseitigen Träger 7. Dieser fungiert in diesem Fall zusammen mit den Spundwandträgern 6 zugleich als Konsolenträger 6, 9, weil an ihm der Trog 3 und/oder das Schneckenrad 4 bzw. dessen ablaufseitiges Lager 10 aufgehängt werden.

Unabhängig hiervon kann an den kopfseitigen Träger 7 aber auch ein Ablaufkasten 6, 8 angeschlossen werden, wie die Fig. 3B zeigt. In diesem Fall fungiert eine Sohlenwand 8 des Ablaufkastens 6, 8 als Auflagerbereich für die Seitenwände 6 des Ablaufkastens 6, 8, die die Funktion der bereits beschriebenen seitlichen Träger 6 übernehmen. Der Trog 3 stützt sich über ein Traggerüst 12 und/oder Vorsprünge 9 am Auflagerbereich des Ablaufkastens 6, 8 bzw. dessen Sohlenwand 8 ab. Die von den seitlichen Trägern bzw. Konsolenträgern 6 respektive den Seitenwänden 6 des Ablaufkastens 6, 8 aufgenommenen Kräfte werden über die bereits angesprochene Sohlenwand 8 bzw. dem horizontalen Träger 7 und die Seitenwände 6 in das Erdreich eingeleitet. Ein zusätzliches (Beton-)Fundament ist in diesem Fall nicht erforderlich.

## Patentansprüche

1. Wasserschneckenanlage, insbesondere Wasserkraftschnecke und/oder Wasserhebeschnecke, mit wenigstens einem in einem Trog (3) aufgenommenen Schneckenrad (4), **dadurch gekennzeichnet, dass** der Trog (3) und/oder das Schneckenrad (4) im Zuge ihrer Aufstellung am Betriebsort an eine bauseitig bereits vorhandene Trageinheit (6, 7; 8, 9) angeschlossen werden.

2. Wasserschneckenanlage nach Anspruch 1, **dadurch gekennzeichnet, dass** die Trageinheit (6, 7; 8, 9) als Tragkonsole ausgebildet ist.

3. Wasserschneckenanlage nach Anspruch 1 oder 2, **dadurch gekennzeichnet, dass** die Trageinheit (6, 7; 8, 9) mit wenigstens zwei Trägern (6) ausgerüstet ist, welche den Trog (3) zwischen sich aufnehmen.

4. Wasserschneckenanlage nach einem der Ansprüche 1 bis 3, **dadurch gekennzeichnet, dass** die Trageinheit (6, 7; 8, 9) mit zwei seitlichen Trägern (6) und einem kopfseitigen Träger (7) ausgerüstet ist.

5. Wasserschneckenanlage nach Anspruch 4, **dadurch gekennzeichnet, dass** der kopfseitige Träger (7) als Halterung für wenigstens ein Lager (10) des Schneckenrades (4) und/oder den Trog (3) fungiert.

6. Wasserschneckenanlage nach einem der Ansprüche 1 bis 5, **dadurch gekennzeichnet, dass** die Trageinheit (6, 7; 8, 9) vorzugsweise 1-förmige Träger (6, 7), insbesondere Stahlträger, aufweist.

7. Wasserschneckenanlage nach Anspruch 6, **dadurch gekennzeichnet, dass** die Träger (6, 7) als Konsolenträger der Tragkonsole ausgebildet sind.

8. Wasserschneckenanlage nach einem der Ansprüche 1 bis 7, **dadurch gekennzeichnet, dass** die Trageinheit (6, 7; 8, 9) als insgesamt U-förmiges und/oder kastenförmiges Profil ausgebildet ist.

9. Wasserschneckenanlage nach einem der Ansprüche 1 bis 8, **dadurch gekennzeichnet, dass** die Trageinheit (6, 7; 8, 9) vor Anbringung des Troges (3) und/oder des Schneckenrades (4) am Betriebsort platziert wird, beispielsweise in ein Betonfundament eingegossen und/oder ganz oder teilweise in das Erdreich eingetrieben wird.

10. Wasserschneckenanlage nach einem der Ansprüche 1 bis 9, **dadurch gekennzeichnet, dass** die Trageinheit (6, 7; 8, 9) einendseitig und/oder beidendseitig des Troges (3) angeordnet ist.

11. Wasserschneckenanlage nach einem der Ansprüche 1 bis 10, **dadurch gekennzeichnet, dass** im Bereich der Trageinheit (6, 7; 8, 9) ein Reduzierelement (11) vorgesehen ist, welches den Ausströmquerschnitt des Troges (3) verringert.

12. Wasserschneckenanlage nach einem der Ansprüche 1 bis 11, **dadurch gekennzeichnet, dass** die Trageinheit (6, 7; 8, 9) einen Konsolenflansch (9) aufweist, welcher zwischen dem Trog (3) und einem Auflagerbereich (8) angeordnet ist.

13. Verfahren zur Herstellung einer Wasserschneckenanlage, insbesondere Wasserkraftschnecke und/oder Wasserhebeschnecke, mit wenigstens einem in einem Trog (3) aufgenommenen Schneckenrad (4), **dadurch gekennzeichnet, dass** der Trog (3) und/oder das Schneckenrad (4) im Zuge ihrer Aufstellung am Betriebsort an eine bauseitig bereits vorhandene Trageinheit (6, 7; 8, 9) angeschlossen werden.
